# EUROPÄISCHE PATENTANMELDUNG

(11) **EP 2 557 247 A1**
(43) Veröffentlichungstag der Anmeldung: **13.02.2013**
(21) Anmeldenummer: 12450023.2
(22) Anmeldetag: 16.04.2012
(51) Int. Cl.: E04B 1/80, E04B 1/76, B32B 5/16, B32B 5/18, B32B 27/30, C08J 9/232, B32B 27/20, C08J 9/00

(54) **Dämmplatte zur thermischen Isolierung der Außenfassaden von Gebäuden**

(30) Priorität: 11.08.2011 AT 11642011
(71) Anmelder: Flatz Verpackungen-Styropor GmbH, 6923 Lauterach (AT)
(72) Erfinder: Flatz, Hans-Peter, 6923 Lauterach (AT)
(74) Vertreter: Hehenberger, Reinhard

(57) **Zusammenfassung**

Dämmplatte zur thermischen Isolierung der Außenfassaden von Gebäuden, welche zwei Schichten (1, 2) enthält, wobei die Außenfläche einer ersten Schicht (1) zur Anlage an die Außenfassaden bestimmt ist und die Außenfläche der zweiten Schicht (2) zur Aufbringung eines Verputzes dient, weiters die erste Schicht (1), welche dicker als die zweite Schicht (2) ist, aus einem expandierten Polystyrol-Granulat, welches einen Zusatz von athermanen Stoffen im Ausmaß von 3,5 Gew.-% bis 7 Gew.-% enthält, besteht, sowie die zweite Schicht (2) aus einem expandierten Polystyrol-Granulat besteht, wobei durch die erste Schicht (1) überwiegend die thermische Isolierung bewirkt wird sowie durch die zweite Schicht (2) die für deren Befestigung an einer Außenfassade und die für die Aufbringung des Verputzes erforderliche Spannungsfreiheit der Dämmplatte bewirkt wird. Dabei enthält die zweite Schicht (2) einen Zusatz von athermanen Stoffen im Ausmaß von 0,5 Gew.-% bis 4 Gew.-% sowie weiters organische helle Farbpigmente im Ausmaß von 0,03 Gew.-% bis 0,3 Gew.-%, durch welchen sie eine helle Färbung erhält, wodurch auf diese auftreffende Wärmestrahlen von deren Oberfläche weitgehend reflektiert werden.

## Beschreibung

Die gegenständliche Erfindung betrifft eine Dämmplatte zur thermischen Isolierung der Außenfassaden von Gebäuden, welche Dämmplatte zwei Schichten enthält, wobei die Außenfläche einer ersten Schicht zur Anlage an die Außenfassaden bestimmt ist und die Außenfläche der zweiten Schicht zur Aufbringung eines Verputzes dient, weiters die erste Schicht, welche dicker als die zweite Schicht ist, aus einem expandierten Polystyrol-Granulat besteht, welches einen Zusatz von athermanen Stoffen im Ausmaß von 3,5 Gew.-% bis 7 Gew.-% enthält, sowie die zweite Schicht aus einem expandierten Polystyrol-Granulat besteht, wobei durch die erste Schicht überwiegend die thermische Isolierung bewirkt wird sowie durch die zweite Schicht die für deren Befestigung an einer Außenfassade und die für die Aufbringung des Verputzes erforderliche Spannungsfreiheit der Dämmplatte bewirkt wird.

Es ist bekannt, Dämmplatten zur thermischen Isolierung der Außenfassaden von Gebäuden aus expandierten Polystyrol-Granulaten herzustellen. Derartige Dämmplatten weisen aufgrund der geringen Wärmeleitfähigkeit von expandierten Polystyrol-Granulaten eine gute Dämmwirkung auf. Um die Dämmwirkung weiter zu verbessern, ist es weiters bekannt, dem Polystyrol athermane Stoffe, wie Ruß, Graphit, Metalloxide, Aluminiumpulver usw., beizufügen, durch welche die Wärmeleitfähigkeit von derartigen aus expandierten Polystyrol-Granulaten hergestellten Dämmplatten weiter vermindert bzw. die Dämmwirkung erhöht wird.

Betreffend die Eigenschaften von Polystyrol-Granulaten in der Verwendung zur Herstellung von Dämmplatten einerseits und die Verwendung von athermanen Stoffen als Zusätze zu Polystyrol, um die Wärmeleitfähigkeit zu verringern bzw. die Dämmwirkung von aus Polystyrol-Granulaten hergestellten Dämmplatten zu erhöhen andererseits, wird auf die EP 620246 B1 Bezug genommen, in welcher hierzu ausführliche Erläuterungen enthalten sind.

Dämmplatten für die thermische Isolierung, welche aus einem expandierten Polystyrol-Granulat, welches einen Zusatz von athermanen Stoffen enthält, hergestellt sind, entsprechen jedoch deshalb nicht den Erfordernissen, da diese nach deren Befestigung an Außenfassaden von Gebäuden und vor der Aufbringung des Verputzes durch auf diese gelangende Wärmestrahlen so stark erwärmt werden können, dass sie sich hierdurch ausdehnen, wodurch sie sich von den Außenfassaden ablösen können. Aus diesem Grund besteht das Erfordernis, derartige Dämmplatten bei deren Befestigung an Außenfassaden und darauffolgend so lange, bis auf diese der Verputz aufgebracht worden ist, mittels Planen oder Netzen, welche z.B. an Baugerüsten befestigt sind, gegenüber auf diese gelangende Wärmestrahlen und damit gegenüber deren Erwärmung zu schützen.

Diese Maßnahmen bedingen jedoch einen zusätzlichen Aufwand, durch welchen die thermische Isolierung von Gebäuden erschwert und verteuert wird.

Um diese Nachteile zu vermeiden, ist es aus der EP 1815077 B1 bekannt, eine derartige Dämmplatte aus zwei miteinander verbundenen Dämmplatten, welche aus expandierten Polystyrol-Granulaten bestehen, herzustellen. Die erste Dämmplatte, welche dazu bestimmt ist, an Außenfassaden zur Anlage gebracht zu werden, besteht aus einem expandierten Polystyrol, welches einen Zusatz von athermanen Stoffen enthält und dadurch grau ist. Die zweite Dämmplatte, welche sich nach der Befestigung der zweiteiligen Dämmplatte an der der Außenseite abliegenden Seite befindet, besteht demgegenüber aus einem weißen Polystyrol-Granulat, welches keine Zusätze von athermanen Stoffen enthält und deshalb weiß ist. Die erste Dämmplatte weist eine größere Dicke als die zweite Dämmplatte auf. Da die zweite Dämmplatte keine athermanen Stoffe enthält, werden von dieser auf diese auftreffende Wärmestrahlen reflektiert, wodurch eine Aufheizung von an Außenfassaden befestigten Dämmplatten vermieden wird, sodass kein Erfordernis besteht, diese bis nach dem Aufbringen des Verputzes gegenüber Wärmestrahlen zu schützen.

Dieser bekannten Dämmplatte haftet jedoch der Nachteil an, dass die beiden unterschiedlichen Dämmplatten, aus welchen sie hergestellt ist, miteinander verbunden werden müssen, was einen zusätzlichen Aufwand in der Herstellung bedingt, wobei weiters eine dauerhafte Verbindung dieser beiden Dämmplatten gewährleistet sein muss.

Um diesen Nachteil zu vermeiden, ist es aus der AT 010337 U2 bekannt, eine einstückige Wärmedämmplatte zu schaffen, welche zwei Schichten aufweist, wobei die eine Schicht aus einem expandierten Polystyrol-Granulat, welches einen Zusatz von athermanen Stoffen enthält, und die zweite Schicht gleichfalls aus einem expandierten Polystyrol-Granulat, welches jedoch keinen Zusatz von athermanen Stoffen enthält, besteht. Da diese beiden Schichten an den einander zugewandten Flächen aufgrund der Polystyrol-Granulate mit Erhebungen und Vertiefungen ausgebildet sind, welche ineinandergreifen, ist eine feste und dauerhafte Befestigung der beiden Schichten aneinander gewährleistet. Diese Ausbildung wird dadurch bewirkt, dass zur Herstellung dieser Dämmplatte in eine beheizbare Form eine erste Schicht eingebracht wird und in der Folge auf die erste Schicht eine zweite Schicht aufgeschäumt wird. Hierdurch wird die zweite Schicht mit der ersten Schicht dauerhaft verbunden. Dieser Wärmedämmplatte haftet jedoch bei deren Verwendung der Nachteil an, dass die von einer Außenfassade abliegende Schicht deshalb, da sie keine athermanen Zusätze enthält, eine höhere Wärmeleitfähigkeit und somit eine geringere Wärmedämmwirkung als die an die Außenfassade anliegende Schicht aufweist.

Der gegenständlichen Erfindung liegt somit die Aufgabe zugrunde, eine Dämmplatte zur thermischen Isolierung von Gebäuden zu schaffen, welche gleichfalls zweischichtig ist, wobei durch die von der Außenfassade abliegende Schicht nicht nur die angestrebte Reflexion von Wärmestrahlen bewirkt wird, sondern auch die Wärmeleitfähigkeit dieser Schicht vermindert ist, wodurch die durch diese Schicht bewirkte Dämmwirkung erhöht und somit die Dämmwirkung dieser zweischichtigen Dämmplatte gegenüber bekannten derartigen Dämmplatten zur thermischen Isolierung verbessert ist.

Diese Aufgabe wird erfindungsgemäß dadurch gelöst, dass die zweite Schicht Zusätze von athermanen Stoffen im Ausmaß von 0,5 Gew.-% bis 4 Gew.-% sowie weiters von organischen hellen Farbpigmenten im Ausmaß von 0,03 Gew.-% bis 0,3 Gew.-% enthält, wodurch auf diese auftreffende Wärmestrahlen von deren Oberfläche weitgehend reflektiert werden, sodass einerseits deren Dämmwirkung verbessert wird und andererseits eine Erwärmung der Dämmplatte vor der Aufbringung des Verputzes auf diese weitgehend vermieden wird.

Nach einer ersten Ausführungsvariante besteht die zweite Schicht aus einem Polystyrol-Granulat, welches Zusätze von athermanen Stoffen im Ausmaß von 0,5 Gew.-% bis 4 Gew.-% und von hellen Farbpigmenten im Ausmaß von 0,03 Gew.-% bis 0,3 Gew.-% enthält. Hierbei weist die zweite Schicht eine gleichmäßige helle Färbung auf.

Nach einer zweiten Ausführungsvariante besteht die zweite Schicht einerseits zu 10 % bis 60 %, insbesondere zu 30 %, aus einem Polystyrol-Granulat, welches Zusätze von athermanen Stoffen im Ausmaß von 0,5 Gew.-% bis 4 Gew.-%, bezogen auf die gesamte Schicht, enthält und andererseits zu 90 % bis 40 %, insbesondere zu 70 %, aus einem Polystyrol-Granulat, welches Zusätze an hellen organischen Farbpigmenten im Ausmaß von 0,03 Gew.-% bis 0,3 Gew.-%, bezogen auf die gesamte Schicht, enthält.

Die Farbpigmente sind insbesondere durch gelbe, rosa oder hellgraue Pigmente gebildet.

Der Gegenstand der Erfindung ist nachstehend anhand eines in der Zeichnung dargestellten Ausführungsbeispiels näher erläutert. Es zeigt:

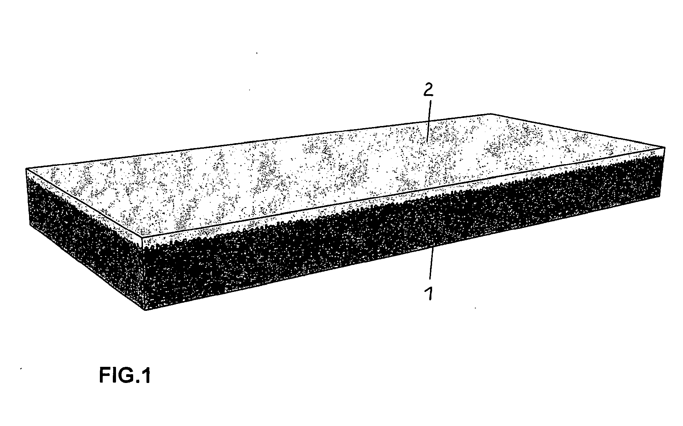

- FIG.1: eine erfindungsgemäße Dämmplatte zur thermischen Isolierung von Gebäuden, in axonometrischer Darstellung.

Die in FIG. 1 dargestellte Dämmplatte weist zwei Schichten 1 und 2 auf, wobei eine erste Schicht 1 aus einem expandierten Polystyrol-Granulat, welches einen Zusatz von athermanen Stoffen im Ausmaß von 3,5 Gew.-% bis 7 Gew.-% enthält, besteht und die zweite Schicht 2 aus einem expandierten Polystyrol-Granulat, welches einen Zusatz von athermanen Stoffen im Ausmaß von 0,5 Gew.-% bis 4 Gew.-% sowie einen Zusatz von hellen, insbesondere gelben, rosa oder grauen, organischen Farbpigmenten im Ausmaß von 0,03 Gew.-% bis 0,3 Gew.-% enthält, besteht. Die erste Schicht 1 weist gegenüber der zweiten Schicht 2 eine mehrfache Dicke auf.

Diese Dämmplatte zur thermischen Isolierung ist dazu bestimmt, auf Außenfassaden von Gebäuden aufgebracht zu werden, wobei die Außenfläche der ersten Schicht 1 an die Außenfassade zur Anlage gebracht und die Dämmplatte an dieser befestigt wird, und auf die Außenfläche der zweiten Schicht 2 ein Verputz aufgebracht wird.

Durch die innere Schicht 1, welche grau ist, wird die wesentliche Dämmwirkung erbracht und durch die äußere Schicht 2, welche hellgrau, rosa oder gelb ist, wird eine Reflexion von auf diese auftreffenden Wärmestrahlen bewirkt. Da jedoch auch die äußere Schicht 2 aus einem Polystyrol-Granulat besteht, das einen Zusatz von athermanen Stoffen enthält, weist sie gegenüber einer Schicht aus weißem Polystyrol-Granulat, welches keinen Zusatz von athermanen Stoffen enthält, eine wesentlich bessere thermische Dämmwirkung auf.

Die Herstellung einer derartigen Dämmplatte erfolgt dadurch, dass in eine beheizbare Form eine Schicht 2 aus einem expandierten Polystyrol-Granulat, welches einen Zusatz von 0,5 Gew.-% bis 4 Gew.-% von athermanen Stoffen und weiters einen Zusatz von 0,03 Gew.-% bis 0,3 Gew.-% an hellen organischen Pigmenten enthält, eingebracht wird. Hierauf wird in die Form auf die Schicht 2 eine wesentlich dickere Schicht 1 aus einem expandierten Polystyrol-Granulat, welches einen Zusatz von athermanen Stoffen im Ausmaß von 3,5 Gew.-% bis 7 Gew.-% enthält, eingebracht. In der Folge werden diese beiden in der Form befindlichen Schichten 1 und 2 aus Polystyrol-Granulaten durch Erwärmung und Druck zu einer einstückigen Wärmedämmplatte verschweißt.

Alternativ dazu wird in die beheizbare Form zuerst die Schicht 1 aus einem expandierten Polystyrol-Granulat, welches einen Zusatz von athermanen Stoffen enthält, eingebracht und wird auf diese Schicht 1 die Schicht 2 aus einem expandierten Polystyrol-Granulat, welches Zusätze aus athermanen Stoffen und aus hellen organischen Pigmenten enthält, eingebracht, worauf diese beiden Schichten 1 und 2 miteinander zu einer einstückigen Wärmedämmplatte verschweißt werden. Dabei weist die Schicht 2 eine gleichmäßige Färbung auf.

Gemäß einer Ausführungsvariante besteht die Schicht 2 zu 10 % bis 60 %, insbesondere zu 30 %, aus einem Polystyrol-Granulat, welches einerseits Zusätze an athermanen Stoffen im Ausmaß von 0,5 Gew.-% bis 4 Gew.-% der gesamten Schicht 2 enthält und andererseits zu 90 % bis 40 %, insbesondere zu 70 %, aus einem Polystyrol-Granulat, welches helle organische Farbpigmente im Ausmaß von 0,03 Gew.-% bis 0,3 Gew.-% enthält. Dabei weist die Schicht 2 an ihren Oberflächen eine Musterung auf.

Diese thermische Dämmplatte weist damit zwei Schichten 1 und 2 aus expandierten Polystyrol-Granulaten mit unterschiedlichen Zusätzen auf, wobei durch die Schicht 1 die maßgebliche Wärmedämmung und durch die Schicht 2 sowohl eine Reflexion von auftreffenden Wärmestrahlen als auch gegenüber bekannten derartigen Dämmplatten eine verbesserte Wärmedämmung bewirkt wird.

## Patentansprüche

1. Dämmplatte zur thermischen Isolierung der Außenfassaden von Gebäuden, welche zwei Schichten (1, 2) enthält, wobei die Außenfläche einer ersten Schicht (1) zur Anlage an die Außenfassaden bestimmt ist und die Außenfläche der zweiten Schicht (2) zur Aufbringung eines Verputzes dient, weiters die erste Schicht (1), welche dicker als die zweite Schicht (2) ist, aus einem expandierten Polystyrol-Granulat, welches einen Zusatz von athermanen Stoffen im Ausmaß von 3,5 Gew.-% bis 7 Gew.-% enthält, besteht, sowie die zweite Schicht (2) aus einem expandierten Polystyrol-Granulat besteht, wobei durch die erste Schicht (1) überwiegend die thermische Isolierung bewirkt wird sowie durch die zweite Schicht (2) die für deren Befestigung an einer Außenfassade und die für die Aufbringung des Verputzes erforderliche Spannungsfreiheit der Dämmplatte bewirkt wird, **dadurch gekennzeichnet, dass** die zweite Schicht (2) einen Zusatz von athermanen Stoffen im Ausmaß von 0,5 Gew.-% bis 4 Gew.-% sowie weiters organische helle Farbpigmente im Ausmaß von 0,03 Gew.-% bis 0,3 Gew.-% enthält, durch welchen sie eine helle Färbung erhält, wodurch auf diese auftreffende Wärmestrahlen von deren Oberfläche weitgehend reflektiert werden, sodass einerseits deren Dämmwirkung verbessert wird und andererseits eine Erwärmung der Dämmplatte vor der Aufbringung des Verputzes auf diese weitgehend vermieden wird.

2. Dämmplatte nach Patentanspruch 1, **dadurch gekennzeichnet, dass** die zweite Schicht (2) aus einem Polystyrol-Granulat besteht, welches Zusätze von athermanen Stoffen im Ausmaß von 0,5 Gew.-% bis 4 Gew.-% und von hellen Farbpigmenten im Ausmaß von 0,03 Gew.-% bis 0,3 Gew.-% enthält.

3. Dämmplatte nach Patentanspruch 1, **dadurch gekennzeichnet, dass** die zweite Schicht (2) einerseits zu 10 % bis 60 %, insbesondere zu 30 %, aus einem Polystyrol-Granulat besteht, welches Zusätze von athermanen Stoffen im Ausmaß von 0,5 Gew.-% bis 4 Gew.-% der gesamten zweiten Schicht enthält, und andererseits zu 90 % bis 40 %, insbesondere zu 70 %, aus einem Polystyrol-Granulat besteht, welches helle organische Farbpigmente im Ausmaß von 0,03 Gew.-% bis 0,3 Gew.-% der gesamten zweiten Schicht enthält.

4. Dämmplatte nach einem der Patentansprüche 1 bis 3, **dadurch gekennzeichnet, dass** die Farbpigmente durch gelbe, rosa oder hellgraue Pigmente gebildet sind.
